# EUROPÄISCHE PATENTSCHRIFT

(11) **EP 0 541 937 B1**
(45) Veröffentlichungstag und Bekanntmachung des Hinweises auf die Patenterteilung: **08.02.1995**
(21) Anmeldenummer: 92116327.5
(22) Anmeldetag: 24.09.1992
(51) Int. Cl.: C04B 35/00, C04B 35/64, H01C 17/06, H01C 7/00

(54) **Verfahren zum Hochtemperaturbrennen eines Widerstandsmaterials auf Basis von Rutheniumoxid oder seiner Verbindungen**
Process for high temperature sintering of a resistor material based on ruthenium oxide or compounds thereof
Procédé de frittage à haute température d'un matériau résistif à base d'oxyde de ruthénium ou de ses composés

(30) Priorität: 15.11.1991 FR 9114082
(43) Veröffentlichungstag der Anmeldung: 19.05.1993
(73) Patentinhaber: DEGUSSA AG, 60311 Frankfurt (DE)
(72) Erfinder: Niemann, Axel, F-87000 Limoges (FR); Mercurio, Jean-Pierre, F-87420 St. Victurnien (FR); Roche, Guy, F-87170 Isle (FR); Labregere, Gerard, F-87170 Isle (FR)

(56) Entgegenhaltungen:
- DE-A- 1 640 561
- DE-A- 3 247 224
- US-A- 5 028 346
- DATABASE WPI Week 8033, Derwent Publications Ltd., London, GB; AN 80-57653C & JP-A-55086101.
- Gmelin, systemnr.63 "Ruthenium", Seiten 79-80,85; Berlin, Verlag Chemie GmbH (1938).

## Beschreibung

Die Erfindung betrifft ein verfahren zum Hochtemperaturbrennen eines Widerstandsmaterials auf Basis von Rutheniumoxid und/oder Ruthenaten mit Perowskit- oder Pyrochlorstruktur durch Wärmebehandlung eines Gegenstands aus einem keramischen Substrat, beschichtet mit einem Widerstandsversatz, der das obengenannte Widerstandsmaterial und ein schmelzbares mineralisches Bindemittel enthält.

Das erfindungsgemäße Anwendungsgebiet ist die Elektronikindustrie: Einkomponentenbauteile, Multikomponenten, elektrische Widerstände, Dickschichthybridschaltungen.

Die Erfindung fällt in den Rahmen der Herstellung elektronischer Vielfunktionsbauteile und bezieht sich speziell auf ein Verfahren, bei dem eine Widerstandspaste auf Basis von RuO₂ auf einen ungesinterten dielektrischen Körper aufgetragen und beide zusammen bei hohen Temperaturen gebrannt werden.

Widerstandsversätze auf Basis von Edelmetallen (Ag, Pd, Rh, Ru, Au, Pt, Ir), die ein zwischen 550 und 900°C schmelzendes mineralisches Bindemittel enthalten, sind hinreichend bekannt. Widerstandspasten werden durch intensives Dispergieren der leitenden Stoffe und Flüsse in einem organischen Medium hergestellt. Diese organische Phase ist notwendig, um das Auftragen des Gemisches zu ermöglichen, sie verflüchtigt sich während des Einbrennens der Widerstandspaste.
Um Widerstandsschichten mit guter Reproduzierbarkeit und vor allem hoher Temperaturstabilität (-50°C bis +150°C) zu erhalten, werden als aktiver Bestandteil der Widerstände Metalloxide eingesetzt. RuO₂ und seine Verbindungen, zum Beispiel CaRuO₃, Bi₂Ru₂O₇ und andere Mischoxide auf Basis von RuO₂ sind hierfür gut geeignet. Die Widerstandspasten auf Basis von RuO₂ werden heute bei 850 °C gesintert.

Beispielsweise lehrt die DE-A 16 40 561 eine Widerstandsmasse aus 10 bis 80 Gew.-% feinteiligem Rutheniumoxid und 90 bis 20 Gew.-% Glas, wobei ein Teil des Rutheniumoxids durch Oxide aus der Gruppe I, II und V des Periodischen Systems ersetzt sein kann. Diese Widerstandsmasse wird bei 650 °C auf ein nichtleitendes Substrat aufgebrannt.

Aus der DE-A 32 47 224 ist eine weitere Widerstandszusammensetzung bekannt, welche Rutheniumoxid, Glas und mindestens ein Oxid der Elemente La, Nd, Pr und Sm enthält. Das Einbrennen erfolgt bei 850 °C.

Die JP-A 55086101 lehrt ein Verfahren zum Brennen von Widerstandselementen, wobei diese während des Brands zu mindestens 50 %, vorzugsweise vollständig, in einem Pulverbett aus Zinkoxid, das ≧ 0,2 % Bi₂O₃ enthält, liegen.

Die Brenntemperatur von Rutheniumoxid und Mischoxiden auf der Basis von RuO₂ darf 1000 °C nicht übersteigen, damit eine Oxidation des Ruthenium IV verhindert wird. Denn bei Temperaturen über 1000 °C geht das Ruthenium von der Oxidationsstufe IV in die Oxidationsstufe VI bzw. VIII über und bildet RuO₃ bzw. RuO₄, Oxide, die bei dieser Temperatur flüchtig sind (The thermodynamic properties and stability of ruthenium and osmium oxides, AB Nikol skii and A.N. Ryabov, Russ. I. Inorg. Chem. Vol. 10 n 1 (1965)). 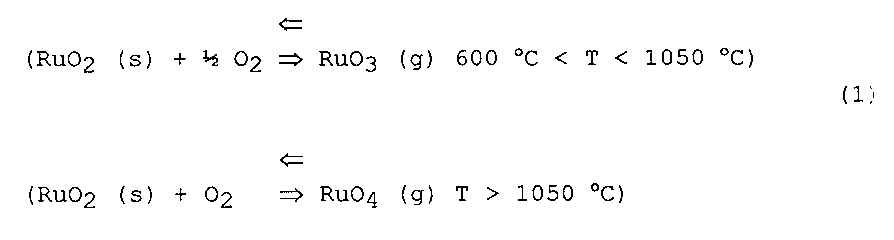
Die Erfahrung hat gezeigt, daß sich die Widerstandsschicht auf Basis von Rutheniumoxid bei Brenntemperaturen über 1050 °C in einer sauerstoffhaltigen oder neutralen Atmosphäre (N₂, Ar) systematisch verflüchtigt.

In einer neutralen Atmosphäre wird der Sauerstoff durch den keramischen Träger oder das mineralische Bindemittel eingebracht, eine Verflüchtigungsreaktion kann nicht verhindert werden.

Aufgrund der Verflüchtigung von Rutheniumoxid war es nicht möglich, die Widerstandspasten auf Basis von RuO₂ oder Mischoxiden von RuO₂ als aktive Phase zusammen mit dem keramischen Träger in Form eines mittleren Nichtleiters bei hohen Temperaturen zu brennen.

Es bestand somit die Notwendigkeit, ein Verfahren zu entwickeln, bei dem das Widerstandsmaterial auf Basis von Rutheniumoxid oder Verbindungen desselben während des Brennens des mit einem Widerstandsversatz beschichteten Keramiksubstrats bei über 1000 °C erhalten bleibt.

Es hat sich herausgestellt, daß die beschriebenen Nachteile des bekannten Verfahrens vermieden werden können durch ein Verfahren zum Hochtemperaturbrennen eines Widerstandsmaterials auf Basis von Rutheniumoxid und/oder Ruthenaten mit Perowskit- oder Pyrchlorstruktur durch Wärmebehandlung eines Gegenstands aus einem keramischen Substrat, beschichtet mit einem Widerstandsversatz, der das obengenannte Widerstandsmaterial und ein schmelzbares mineralisches Bindemittel enthält, wobei die Wärmebehandlung bei einer Temperatur über 1050 °C in Gegenwart eines Pulverbetts aus Widerstandsmaterial auf Basis von Rutheniumoxid und/oder Ruthenaten mit Perowskit- oder Pyrochlorstruktur mit gleicher Zusammensetzung wie im Widerstandsversatz durchgeführt wird.

Das Pulverbett sättigt die Umgebung des Widerstandsversatzes mit Gas, RuO₃ und/oder RuO₄. Diese Umgebung blockiert die Verflüchtigungsreaktion des in dem Widerstandsversatzes enthaltenen Rutheniumoxids (RuO₂).

### Pulver

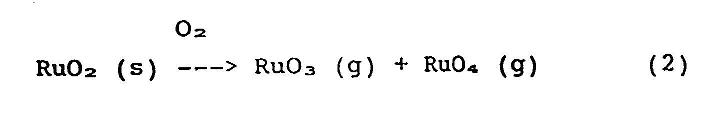

Reaktion (2) ist abhängig von:
- T °C
- Pulvervolumen
- O₂-Partialdruck

### Widerstand

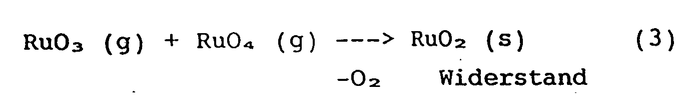

Unter diesen Bedingungen darf die Brenntemperatur der Widerstände 1050°C übersteigen.

Die von den Widerständen eingebrachte geringe Stoffmenge verändert das Gleichgewicht (3) nicht. Der aktive Teil der Widerstandspaste bleibt auf dem Träger.

Üblicherweise besteht der Widerstandstandsversatz aus einem Widerstandsmaterial in Form von feinverteilten Metalloxiden, unter anderem Rutheniumoxid und/oder Ruthenate mit Perowskit- oder Pyrochlorstruktur und dem Pulver eines mineralischen, schmelzbaren Bindemittels, vorzugsweise eines Flusses - die Bestandteile werden in einem organischen Medium dispergiert. Für die Herstellung der elektronischen Bauteile wird eine Schicht des Widerstandsversatzes auf einen gesinterten oder rohen Keramikträger aufgetragen, anschließend wird dieser Verbund in einem abgedeckten oder offenen feuerfesten Tiegel in einem Pulverbett gemäß Anspruch thermisch behandelt.

Dank des Pulverbettes aus Rutheniumoxid können die bisher geltende Temperaturgrenze von 1000°C überschritten und der Brennzyklus speziell auf die Bedingungen der Nichtleiter-Keramiken für mittlere und hohe Temperaturen eingestellt werden. Der Brand erfolgt vorzugsweise bei Temperaturen zwischen 1100 und 1300°C.

Es ist nicht erforderlich, daß der beschichtete Keramikträger mit dem RuO₂-Pulver direkten Kontakt hat. Das Pulver kann durch ein feines Platingitter getrennt werden, um zu verhindern, daß ein Fluß oder der Keramikträger möglicherweise mit dem Rutheniumoxid des Pulvers reagieren.

Die praktische Umsetzung der Erfindung wird an folgenden Beispielen näher erläutert:
Ausgangsmaterial ist ein ungebrannter Keramikträger, z.B. Bariumtitanat, Magnesiumtitanat oder Titanoxid. Dieser Träger besitzt auf seiner Oberfläche Ag/Pd-Kontakte. Die Herstellung der Widerstandspaste erfolgt nach bekannten Verfahren. Die Paste wird in gewünschter Struktur im Siebdruck aufgetragen.

Um eine gute Reproduzierbarkeit der Widerstände zu gewährleisten, wird die Dicke der ungebrannten Schicht gemessen. Die Proben werden sodann getrocknet und auf ein Platingitter gelegt. Unter diesem Gitter befindet sich das RuO₂-Pulver. Das gesamte System (RuO₂-Pulver/Gitter/Probe) wird in einen abgedeckten feuerfesten Tiegel gegeben. Der Brennzyklus ist wie folgt:
Aufheizgeschwindigkeit 5°C/min., Haltezeit 1 h 30' bei 1100°C, Abkühlgeschwindigkeit 5°C/min. (Richtwerte).

Nach diesem Verfahren wurden Widerstandspasten auf Basis von RuO₂ mit unterschiedlichem Gehalt und verschiedenen Flüssen gesintert. Als Trägermaterialien können Elektronikkeramiken mit niedriger und hoher Dielektrizitätskonstante verwendet werden. Das Einbrennen des Verbundes, bestehend aus roher Keramik, Metallelektrode und Widerstand, erfolgt nach dem vorgenannten Brennzyklus. Nachstehend einige Beispiele:

### Beispiel 1

Widerstandspulver: Mineralisches Bindemittel 50%
Leiterphase 50%
Mineralisches Bindemittel: Glas (Degussa:Produkt-Nr. 90 564)
mit folgenden Eigenschaften:

| | |
|---|---|
| Erweichungsbeginn: | 980°C |
| Halbkugelpunkt: | >1200°C |
| Wärmeausdehnungskoeffizient: | 99 x 10⁻⁷/K⁻¹ |

Leiterphase: Rutheniumdioxid, auf chemischen Wege gewonnen aus Rutheniumchorid.

Vorbereitung der Paste für den Siebdruckauftrag: Mineralisches Bindemittel und Leiterphase mischen. Anpasten des Widerstandspulvers mit einem Siebdruckmedium (Degussa-Nummer 2709)
- Widerstandspulver 70%
- Medium 2709 30%
- Siebdruck
- Trocknen
- Einbrennen bei 1100°C, 1 h 30' unter den erfindungsgemäßen Bedingungen.

Man erhält eine Widerstandsschicht auf Basis von RuO₂ mit einem Widerstand von 8 · 10⁻³ Ω·cm (berechnet aus dem Meßwert 8 Ω/□ und einer Schichtdicke von 10 »m).

### Beispiel 2

Widerstandspulver: Mineralisches Bindemittel 75%
Leiterphase 25%
Mineralisches Bindemittel: wie Beispiel 1
Leiterphase: wie Beispiel 1
Vorbereitung der Paste für den Siebdruckauftrag:
wie Beispiel 1
Man erhält eine Widerstandsschicht auf Basis von RuO₂ mit einem Widerstand von 12 · 10⁻³ Ω·cm (berechnet aus dem Meßwert 12 Ω/□ und einer Schichtdicke von 10 »m).

### Beispiel 3

Widerstandspulver: Mineralisches Bindemittel 50%
Leiterphase 50%
Mineralisches Bindemittel: Fluß (Degussa-Nummer 90 255) mit folgenden Eigenschaften:

| | |
|---|---|
| Erweichungsbeginn: | 910°C |
| Halbkugelpunkt: | 1280°C |
| Wärmeausdehnungskoeffizient: | 40 x 10⁻⁷/K⁻¹ |

Leiterphase: wie Beispiel 1
Vorbereitung der Paste für den Siebdruckauftrag: wie Beispiel 1
Man erhält eine Widerstandsschicht auf Basis von RuO₂ mit einem Widerstand von 5 · 10⁻³ Ω·cm (berechnet aus dem Meßwert 5 Ω/□ und einer Schichtdicke von 10 »m).

### Beispiel 4

Widerstandspulver: Mineralisches Bindemittel 50%
Leiterphase 50%
Mineralisches Bindemittel: Fluß (Degussa-Nummer E6.140.2.) mit folgenden Eigenschaften:

| | |
|---|---|
| Erweichungsbeginn: | 810°C |
| Halbkugelpunkt: | 1250°C |
| Wärmeausdehnungskoeffizient: | 56 x 10⁻⁷/K⁻¹ |

Leiterphase: wie Beispiel 1
Vorbereitung der Paste für den Siebdruckauftrag:
wie Beispiel 1
Man erhält eine Widerstandsschicht auf Basis von RuO₂ mit einem Widerstand von 5 · 10⁻³ Ω·cm (berechnet aus dem Meßwert 5 Ω/□ und einer Schichtdicke von 10 »m).

### Beispiel 5

Widerstandspulver: Mineralisches Bindemittel 54%
Leiterphase 46%
Mineralisches Bindemittel: Glaskeramik (Degussa-Nummer GPB01) mit folgenden Eigenschaften:

| | |
|---|---|
| Schmelzpunkt | 1350°C |
| Wärmeausdehnungskoeffizient: | 80 x 10⁻⁷/K⁻¹ |

Leiterphase: wie Beispiel 1
Vorbereitung der Paste für den Siebdruckauftrag:
wie Beispiel 1
Man erhält eine Widerstandsschicht auf Basis von RuO₂ mit einem Widerstand von 1 Ω·cm (berechnet aus dem Meßwert 1 k Ω/□ und einer Schichtdicke von 10 »m).

### Beispiel 6

Widerstandspulver: Mineralisches Bindemittel 60%
Leiterphase 40%
Mineralisches Bindemittel: wie Beispiel 5
Leiterphase: wie Beispiel 1
Vorbereitung der Paste für den Siebdruckauftrag:
wie Beispiel 1
Man erhält eine Widerstandsschicht auf Basis von RuO₂ mit einem Widerstand von 100 Ω·cm (berechnet aus dem Meßwert 100 kΩ/□ und einer Schichtdicke von 10 »m).

## Patentansprüche

1. Verfahren zum Hochtemperaturbrennen eines Widerstandsmaterials auf Basis von Rutheniumoxid und/oder Ruthenaten mit Perowskit- oder Pyrochlorstruktur durch Wärmebehandlung eines Gegenstand aus einem keramischen Substrat, beschichtet mit einem Widerstandsversatz, der das obengenannte Widerstandsmaterial und ein schmelzbares mineralisches Bindemittel enthält, wobei die Wärmebehandlung bei einer Temperatur über 1050 °C in Gegenwart eines Pulverbetts aus Widerstandsmaterial auf Basis von Rutheniumoxid und/oder Ruthenaten mit Perowskit- oder Pyrochlorstruktur mit gleicher Zusammensetzung wie im Widerstandsversatz durchgeführt wird.

2. Verfahren nach Anspruch 1, dadurch gekennzeichnet, daß der Brand bei einer Temperatur zwischen 1100°C und 1300°C erfolgt.

3. Verfahren nach Anspruch 1 oder 2, dadurch gekennzeichnet, daß als Keramiksubstrat eine ungesinterte Elektronikkeramik verwendet wird.

4. Verfahren nach einem der Ansprüche 1 bis 3, dadurch gekennzeichnet, daß die Wärmebehandlung in einem abgedeckten oder offenen feuerfesteten Tiegel erfolgt, in den der Verbund auf das Pulverbett oder ein Gitter über dem Pulverbett gestellt wird.

## Claims

1. Process for the high temperature firing of a resistor material based on ruthenium oxide and/or ruthenates with a perovskite or pyrochlore structure by heat treating an article prepared from a ceramic substrate coated with a resistor compound which contains the above-stated resistor material and a fusible mineral binder, wherein the heat treatment is performed at a temperature of above 1050°C in the presence of a powder bed of resistor material based on ruthenium oxide and/or ruthenates with a perovskite or pyrochlore structure of the same composition as in the resistor compound.

2. Process according to claim 1, characterised in that the firing proceeds at a temperature between 1100°C and 1300°C.

3. Process according to claim 1 or 2, characterised in that an unsintered electronics ceramic is used as the ceramic substrate.

4. Process according to one of claims 1 to 3, characterised in that the heat treatment proceeds in a covered or open refractory crucible in which the composite is placed on the powder bed or a grating above the powder bed.

## Revendications

1. Procédé de cuisson à haute température d'un matériau de résistance à base d'oxyde de ruthénium et/ou de ruthénates à structure perowskite ou pyrochlore par traitement thermique d'une pièce constituée d'un substrat céramique, recouvert d'un dépôt résistif, qui contient le matériau résistant ci-dessus et un liant minéral fusible, dans lequel on réalise le traitement thermique à une température supérieure à 1050°C en présence d'un lit de poudre de matériau résistant à basse d'oxyde de ruthérium et/ou de ruthénates à structure perowskite ou pyrochlore de même composition que celle du dépôt résistif.

2. Procédé selon la revendication 1, caractérisée en ce qu'on réalise la cuisson à une température comprise entre 1100°C et 1300°C.

3. Procédé selon la revendication 1 ou 2, caractérisé en ce qu'on utilise comme substrat céramique une céramique d'électronique non frittée.

4. Procédé selon l'une des revendications 1 à 3, caractérisé en ce qu'on réalise le traitement thermique dans un creuset réfractaire ouvert ou fermé, dans lequel le composite est posé sur le lit de poudre ou qu'un treillis est placé sur le lit de poudre.
